# EUROPÄISCHE PATENTSCHRIFT

(11) **EP 1 544 234 B1**
(45) Veröffentlichungstag und Bekanntmachung des Hinweises auf die Patenterteilung: **13.02.2008**
(21) Anmeldenummer: 04026977.1
(22) Anmeldetag: 12.11.2004
(51) Int. Cl.: C08J 9/00, C08J 9/33, C08J 9/36, C08L 23/10

(54) **Schaumstoffformteile aus offenzelligem EPP**
Shaped foam articles made from open celled EPP
Articles moulés en mousse à base de mousse de polypropylène à cellules ouvertes

(30) Priorität: 19.12.2003 DE 10360398
(43) Veröffentlichungstag der Anmeldung: 22.06.2005
(73) Patentinhaber: BASF Aktiengesellschaft, 67056 Ludwigshafen (DE)
(72) Erfinder: Keppeler, Uwe, Dr., 67126 Hochdorf-Assenheim (DE)

(56) Entgegenhaltungen:
- EP-A- 0 972 727
- EP-A- 1 205 511
- WO-A-20/04005383
- DE-A1- 19 849 149

## Beschreibung

Die Erfindung betrifft ein Verfahren zur Herstellung von Schaumstoffformteilen auf Basis von Propylenpolymerisat-Schaumstoffpartikeln,wobei man eine Mischung enthaltend
a) 5 bis 95 Vol.% Schaumstoffpartikel A) mit einer Offenzelligkeit (nach DIN-ISO 4590) von mehr als 40% und
b) 5 bis 95 Vol.-% Schaumstoffpartikel B) mit einer Offenzelligkeit (nach DIN-ISO 4590) von weniger als 60 %
versintert.

Schaumstoffteile aus Propylenpolymerisaten werden in steigendem Maße für Automobilinnenteile, als Verpackungsmaterialien und für Freizeitartikel eingesetzt. Man erhält sie durch Nachexpandieren und Versintern von entsprechenden Schaumstoffpartikeln. Diese wiederum werden nach bekannten Verfahren (z.B. EP-A 95109) hergestellt durch Imprägnieren von Polypropylengranulat in wässriger Suspension in einem Druckbehälter mit einem flüchtigen Treibmittel und anschließendem entspannen. Derart hergestellte Schaumstoffpartikel zeigen im DSC-Thermodiagramm einen sogenannten Doppelpeak, d.h. mindestens einen Hochtemperaturpeak bei einer höheren Temperatur als dem Schmelzepeak des eingesetzten Propylenpolymerisats (siehe z.B. EP-A 415744). Sie zeichnen sich durch eine besonders gute Verarbeitbarkeit und gute mechanische Eigenschaften, z.B. Wärmestandfestigkeit aus. Normalerweise sind derartige Schaumstoffpartikel geschlossenzellig; z.B weisen die Schaumstoffpartikel nach EP-A 95109 mindestens 65 % geschlossene Zellen auf. Dies ist in den meisten Anwendungsfällen auch erwünscht.

In der EP-A 1016690 sind Schaumstoffpartikel aus Propylenpolymerisaten beschrieben, die Wasser als Treibmittel sowie 0,05 bis 10 Gew.% eines hydrophilen Polymeren, z.B. ein Polyamid, einen Polyester oder Polyvinylalkohol enthalten. Sie enthalten aber mindestens 85 % geschlossene Zellen, sind also nicht offenzellig.

Offenzellige Kunststoffschaumstoffe sind im allgemeinen elastischer als geschlossenzellige und sie haben eine schalldämpfende Wirkung, was z.B. für Automobilinnenverkleidungen und bei manchen Verpackungsmaterialien von Vorteil ist. In WO 00/15700 sind offenzellige Polyolefinschaumstoffe mit guten schallabsorbierenden Eigenschaften beschrieben. Es handelt sich dabei um Platten, Folien oder Rohre, die durch Extrusion einer Polyolefinschmelze zusammen mit einem flüchtigen organischen Treibmittel hergestellt werden. Bei dieser Schaumextrusion können nur Formteile mit einfacher Geometrie hergestellt werden; außerdem zeigen die Schaumstoffe nicht den oben beschriebenen Doppelpeak im DSC-Thermodiagramm, so dass z.B. ihre Wärmestandfestigkeit für manche Einsatzzwecke unzureichend ist.

Die nicht vorveröffentlichte DE 102 305 83 beschreibt offenzellige Schaumstoffpartikel, die durch Imprägnieren von Polypropylenpolymerisat-Patikeln, die einen polaren wasserunlöslichen Thermoplasten, ein wasserlösliches Polymer oder einen nadelförmigen anorganischen Feststoff als Zellöffner enthalten, in Suspension in einem Druckbehälter bei erhöhter Temperatur mit einem flüchtigen Treibmittel und anschließendem Entspannen erhalten werden können.

Die aus offenzelligen EPP-Partikelschaumstoffen durch Versintern erhältlichen Formteile weisen gegenüber den aus geschlossenzelligen EPP-Partikelschaumstoffen erhältlichen Formteilen in der Regel eine höhere Schallabsorption und höhere Luft-, Wasser und Wasserdampf-durchlässigkeit auf. Sie eignen sich daher insbesondere für Akustikanwendungen, zur Herstellung von Filtern oder in Möbeln und Polstern. Neben diesen anwendungstypischen Eigenschaften sollten die Formteile auch gute mechanische Eigenschaften, insbesondere eine hohe Zugfestigkeit aufweisen.

Die Formteilherstellung aus EPP-Partikelschaumstoffen erfolgt im wesentlichen nach zwei Verfahren, dem Druckfüllverfahren und dem Crackfüllverfahren. Dabei wird in der Regel das sogenannte Druckfüllverfahren aufgrund der einfacheren Werkzeuge und der gleichmäßigeren Dichteverteilung im Formteil bevorzugt.

Beim Druckfüllverfahren wird das elastische Rückstellvermögen der Schaumstoffpartikel zur Beeinflussung der Formteildichte genutzt. Hierbei werden die EPP-Partikelschaumstoffe pneumatisch in eine unter einem Gegendruck (Staudruck) stehende Kavität gefördert. Für die Verarbeitung von höheren Schüttdichten reicht jedoch der übliche Staudruck von bis zu 4 bar oft nicht aus, so dass dann auf das Crackfüllverfahren mit einer drucklosen Füllung und anschließender mechanischer Komprimierung zurückgegriffen werden muss.

Offenzellige EPP-Schaumstoffpartikel, wie sie nach der DE 102 305 83 erhältlich sind, sind daher nur noch bedingt im Druckfüllverfahren verarbeitbar. Je nach Grad der Offenzelligkeit führt der Staudruck nur zu einer geringen Komprimierung der Schaumstoffpartikel. Im anschließenden Bedampfungsschritt werden die Schaumstoffpartikel nicht oder nur geringfügig expandiert und eine akzeptable Verschweißung der Schaumstoffpartikel lässt sich nur mit hohen Verdichtungsgraden erreichen. Die erreichbare Zugfestigkeit liegt daher deutlich unterhalb dem bei geschlossenzelligem EPP üblichem Niveau.

Aufgabe der vorliegenden Erfindung war es, den genannten Nachteilen abzuhelfen und ein Verfahren zur Herstellung von Schaumstoffformteilen mit guter Schallabsorption und gleichzeitig guter Verschweißbarkeit und guten mechanischen Eigenschaften bereitzustellen.

Demgemäss wurde das oben beschriebene Verfahren zur Herstellung von Schaumstoffformteilen gefunden.

Bevorzugt enthalten die Schaumstoffformteile 30 bis 80 Vol.% Schaumpartikel A) und 20 bis 70 Vol.-% Schaumpartikel B).

Propylenpolymerisate im Sinne der Erfindung sind:
a. Homopolypropylen,
b. Randomcopolymer des Propylens mit bis zu 15 Gew.-% Ethylen und/oder Buten-1, vorzugsweise ein Copolymer von Propylen mit 0,5 bis 6 Gew.% Ethylen oder mit 0,5 bis 12 Gew.-% Buten-1 oder ein Terpolymer aus Propylen, 0,5 bis 6 Gew.-% Ethylen und 0,5 bis 6 Gew.-% Buten-1,
c. Mischungen von a. oder b. mit 0,1 bis 75, vorzugsweise 3 bis 50 Gew.-% eines Polyolefin-Elastomeren, z.B. eines Ethylen/Propylen-Blockcopolymeren.

Geeignet sind sowohl mit Ziegler- als auch mit Metallocen-Katalysatoren hergestellte Propylenpolymerisate.

Der Kristallitschmelzpunkt (DSC-Peak-Maximum der Propylenpolymerisate liegt zwischen 120 und 170 C. Ihre Schmelzwärme, bestimmt nach der DSC-Methode, liegt vorzugsweise zwischen 50 und 110 J/g, der Schmelzindex MFI (230 C, 2,16 kp) nach DIN 53735 zwischen 2 und 25 g/10 min.

Geeignete offenzellige Schaumstoffpartikel A sind solche mit einer mittleren Partikelgröße von 1 bis 10 mm und einer Schüttdichte von 5 bis 200 g/l auf Basis von Propylenpolymerisaten mit einer Offenzelligkeit (nach DIN-ISO 4590) von mehr als 40 %, bevorzugt mehr als 75 %.

### Schaumstoffpartikel A)

Derartige offenzellige Schaumstoffpartikel werden nach einem bevorzugten Verfahren hergestellt durch Imprägnieren von Propylenpolymerisat-Partikeln in wässriger Suspension in einem Druckbehälter bei erhöhter Temperatur mit einem flüchtigen Treibmittel und anschließendem Entspannen. Die Propylenpolymerisat-Partikel enthalten 1 bis 40 Gew.-% eines Zellöffners, z.B. einen polaren wasserunlöslichen Thermoplasten, ein wasserlösliches Polymeres oder einen nadelförmigen anorganischen Feststoff.

Zur Herstellung der offenzelligen Schaumstoffpartikel A geht man aus von Granulat, welches vorzugsweise mittlere Durchmesser von 0,2 bis 10, insbesondere von 0,5 bis 5 mm hat. Dieses meist zylinderförmige oder runde Minigranulat wird hergestellt durch Extrudieren des Propylenpolymerisats zusammen mit dem zuzumischenden Zellöffner und weiteren Zusatzstoffen, Auspressen aus dem Extruder, gegebenenfalls Abkühlen und Granulieren.

Wesentlich ist, dass das Minigranulat 1 bis 40 Gew.%, vorzugsweise 5 bis 35 Gew.% eines Zellöffners enthält. Bevorzugte Zellöffner sind polare, wasserunlösliche Thermoplasten, vorzugsweise ein Polyamid (PA) oder Polyoxymethylen (POM); wasserlösliche Polymere, vorzugsweise Polyvinylpyrrolidon (PVP), Polyvinylacetat und Polyethylenoxid; ferner nadelförmige anorganische Feststoffe, vorzugsweise Schnittglas mit einer Länge von 0,25 bis 5 mm. Darüberhinaus kann das Minigranulat übliche Zusatzstoffe, wie Antioxidantien, Stabilisatoren, Flammschutzmittel, Wachse, Pigmente, Farbstoffe und insbesondere Nucleierungsmittel, wie Talkum, Graphitpulver, pyrogene Kieselsäuren, Zeolithe, Bentonite und Polyolefinwachse enthalten.

Das Minigranulat wird einem Rührreaktor in einem Suspensionsmedium dispergiert. bevorzugtes Suspensionsmedium ist Wasser. In diesem Fall müssen Suspensionshilfsmittel zugesetzt werden, um eine gleichmäßige Verteilung des Minigranulats im Suspensionsmittel zu gewährleisten. Geeignete Suspensionshilfsmittel sind wasserunlösliche anorganische Stabilisatoren, wie Tricalciumphosphat, Magnesiumpyrophosphat und Calciumcarbonat; ferner Polyvinylalkohol und Tenside, wie Arylsulfonate und Fettalkoholoxylate. Sie werden in Mengen von 0,05 bis 5 Gew.%, bezogen auf das Minigranulat, eingesetzt. Der Suspension wird ein flüchtiges Treibmittel in Mengen von 2 bis 50 Gew.%, vorzugsweise 5 bis 30 Gew.%, bezogen auf das Minigranulat, zugesetzt. Die Treibmittelzugabe kann dabei vor, während oder nach dem Aufheizen des Reaktorinhalts erfolgen. geeignete Treibmittel sind organische Verbindungen mit einem Siedepunkt zwischen -5 und 150°C, beispielsweise Alkane, Ketone und Ether, sowie anorganische Gase, wie Stickstoff und Kohlendioxid. Besonders bevorzugt sind C₄- bis C₆-Kohlenwasserstoffe.

Beim Imprägnieren sollte die Temperatur in der Nähe der Erweichungstemperatur des Propylenpolymerisats liegen. Sie kann 40 °C unter bis bis 15 °C über der Schmelztemperatur (Kristallitschmelzpunkt) liegen. bevorzugt sind Imprägniertemperaturen zwischen 120°C und 160 °C. Je nach Art und Menge des Treibmittels sowie nach der Höhe der Temperatur stellt sich im Reaktor ein Druck ein, der im allgemeinen höher als 2 bar ist und 40 bar nicht übersteigt. Die Imprägnierzeiten liegen im allgemeinen zwischen 0,5 und 10 Stunden, wonach der Reaktor schnell entspannt wird. Dabei blähen die mit Treibmittel imprägnierten Propylenpolymerisat-Partikel auf. Bedingt durch den Zellöffner entstehen dabei die erfindungsgemäßen offenzelligen Schaumstoffpartikel.

Nach dem Entspannen und Ablassen aus dem Reaktor werden die Schaumstoffpartikel von Suspensionsmedium abgetrennt und gewaschen. Falls ein wasserlöslicher Zellöffner eingesetzt wurde, wird dieser weitgehend mit ausgewaschen. Im Falle wasserunlöslicher Zellöffner bleiben diese im Schaumstoffpartikel enthalten.

Die offenzelligen Schaumstoffpartikel A haben besonders gute mechanische Eigenschaften, wenn sie im DSC-Schmelzdiagramm mindestens einen Hochtemperaturpeak bei einer höheren Temperatur als dem Schmelzpeak des eingesetzten Propylenpolymerisats aufweisen. Die Mittlere Partikelgröße der Schaumstoffpartikel A beträgt 1 bis 10 mm, vorzugsweise 2 bis 8 mm; ihre Schüttdichte kann zwischen 5 und 200 g/l, vorzugsweise zwischen 10 und 100 g/l liegen. Sie sind gekennzeichnet durch eine Offenzelligkeit (nach DIN-ISO 4590) von mehr als 40 %, vorzugsweise mehr als 50 % und insbesondere mehr als 75 %. Im Idealfall sind praktisch alle Zellen geöffnet, d.h. das Schaumgerüst besteht nur aus Zellstegen. Der mittlere Zelldurchmesser beträgt vorzugsweise 0,01 bis 0,5 mm, insbesondere 0,05 bis 0,3 mm.

### Schaumstoffpartikel B)

Die überwiegend geschlossenzelligen Schaumstoffpartikel können z. B. entsprechend der EP-A 95109 hergestellt werden. Bevorzugt weisen die Schaumpartikel B) eine Offenzelligkeit von weniger als 10 % auf.

Die Schaumstoffformteile werden durch Versintern einer Mischung enthaltend
a) 5 bis 95 Vol.-%, bevorzugt 30 bis 80 Vol.% Schaumstoffpartikel A) und
b) 5 bis 95 Vol.-% , bevorzugt 20 bis 70 Vol.-% Schaumstoffpartikel B)
erhalten.

Bevorzugt weisen die Schaumpartikel A) und B) eine Schüttdichte im Bereich von 5 bis 200 kg/m³ und eine mittlerer Partikelgröße im Bereich von 1 bis 10 mm auf. Sie zeigen im DSC-Thermogramm bevorzugt mindestens einen Hochtemperaturpeak bei einer höheren Temperatur als dem Schmelzpeak des Propylenpolymerisat.
Der mittlere Zelldurchmesser der Schaumpartikel A) und B) liegt in der Regel im Bereich von 0,01 bis 0,5 mm.

Verwendet man Mischungen von Schaumstoffpartikeln A) und B) mit gleichen oder ähnlichen Schüttdichten, so kann mit reduziertem Dampfdruck bei vergleichbarer Formteildichte eine deutlich verbesserte Verschweißung und eine erhöhte Zugfestigkeit des Formteils erreicht werden.

Bei deutlich unterschiedlichen Schüttdichten der Schaumstoffpartikeln A) und B) kann die Formteildichte besser gesteuert und ein größerer Bereich für die Formteildichte eingestellt werden. Die Formteildichte liegt in der Regel im Bereich von 10 bis 300 kg/m³.

Überraschenderweise liegt die Schallabsorption und die Zugfestigkeit eines Formteils aus einer Mischung offenzelliger und geschlossenzelliger Schaumstoffpartikeln bei gleicher, mittlerer Offenzelligkeit deutlich über der Schallabsorption bzw. der Zugfestigkeit eines Formteils aus nur offenzelligen Schaumpartikeln.

Die Schaumstoffformteile eignen sich insbesondere für Akustikanwendungen, in der Filtertechnik und für Anwendungen in der Möbel und Polsterindustrie.

### Beispiele

### Schaumstoffpartikel A1,A2, und A3

10 Gewichtsteile Polypropylen (Mopolen® 320 MC, Basell GmbH), 20 Gewichtsteile Polyoxymethylen (Ultraform® N 2320 der BASF Aktiengesellschaft, 1 Gewichtsteil Talkum HP 325 und 0,5 Gewichtseile Polyethylenwachs mit einem zahlenmittleren Molekulargewicht Mₙ = 3000 (Luwax® AF 31 der BASF Aktiengesellschaft) wurden dem Extruder zugeführt und zu einem Minigranulat (d= 0,8 -1,2 mm; l: 1,8-3 mm) verarbeitet.

100 Gewichtsteile Minigranulat, 6,7 Gewichtsteile CaCO₃, 0,13 Gewichtsteile Fettalkoholoxylat, 230 Gewichtsteile Wasser und 20 Gewichtsteile n/iso-Butan wurden in einen druckfesten Rührkessel gegeben und in ca. 55 Minuten auf eine Imprägniertemperatur im Bereich von 127 - 130°C gebracht. Nach Erreichen dieser Temperatur wurde der Inhalt des Rührkessels auf Umgebungsdruck entspannt und das Minigranulat zu Schaumstoffpartikeln verschäumt.

### Schaumstoffpartikel B

Expandierte, überwiegend geschlossenzellige Schaumstoffpartikel aus Polypropylen (EPP) der BASF Aktiengesellschaft:
B1: Neopolen® P 9225 K
B2: Neopolen® P 9240

### Beispiele 1 bis 3 und Vergleichsversuche V1 bis V5

Die Schaumstoffpartikel A und B wurden mit den in Tabelle 1 angegebenen Versuchsparametem im Druckfüll- bzw. Crackfüllverfahren zu Schaumstoffformteilen versintert.

Die Offenzelligkeit wurde nach DIN-ISO 4590 ermittelt. Für die Mischungen aus offenzelligen und geschlossenzelligen Schaumstoffpartiklen A) und B) wurde für die Offenzelligkeit der Mittelwert eingesetzt.

Der Verdichtungsgrad VG wurde aus dem Verhältnis Formteildichte/Schüttdichte bestimmt. Unterster Verarbeitungsbereich (Formteildichte) liegt bei deutlich niedrigerem VG.

n.b. nicht bestimmt

Die Schwindung [%] wurde aus dem Mittelwert aus Längen und Breitenschwindung eines Quaders 300x200x60 mm ermittelt.

Die Schallabsorption wurde nach DIN EN ISO 10534 (Prüfkörperdicke 30 mm) und die Zugfestigkeit nach DIN EN ISO 1798 ermittelt.

**Tabelle 1:**

| | V 1 | V 2 | V 3 | V 4 | V 5 | Beispiel 1 | Beispiel 2 | Beispiel 3 |
|---|---|---|---|---|---|---|---|---|
| Schaumstoffpartikel (Vol.%) | A1 | A2 | A3 | B1 | B2 | 50 A3/50 B1 | 66 A3/34 B1 | 50 A3/50 B2 |
| Offenzelligkeit [%] | 42 | 65 | 90 | < 10 | <10 | ca.45 | ca. 60 | ca. 45 |
| Schüttdichte [kg/m³] | 32,6 | 38,4 | 39,8 | 24,5 | 38,3 | 32,9 | 34,6 | 39,1 |
| Druckfüllverfahren | | | | | | | | |
| Staudruck [bar] | 4 | 4 | Bis 4bar Staudruck kein Formteil herstellbar | 3,4 | 4 | n.b. | n.b | n.b. |
| Bedampfungsdruck [bar] | 3,6 | 3,6 | | 3,6 | 3,6 | n.b. | n.b | n.b. |
| Formteildichte [kg/m³] | 63,0 | 60,0 | | 63 | 75 | n.b. | n.b | n.b. |
| Verdichtungsgrad | 1,9 | 1,6 | | 2,5 | 1,9 | n.b. | n.b | n.b. |
| Schwindung [%] | 3,2 | 3,5 | | 1,5 | 1,9 | n.b. | n.b | n.b. |
| Crackfüllverfahren | | | | | | | | |
| Crackspalt [%] | n.b. | n.b. | 45 | n.b | n.b | 33 | 40 | 45 |
| Bedampfungsdruck [bar] | n.b. | n.b. | 3,0 | n.b | n.b | 2,6 | 3,0 | 2,8 |
| Formteildichte [kg/m³] | n.b. | n.b. | 85 | n.b | n.b | 55 | 68 | 81 |
| Verdichtungsgrad | n.b. | n.b. | 2,1 | n.b | n.b | 1,7 | 2,0 | 2,1 |
| Schwindung [%] | n.b. | n.b. | 3,0 | n.b | n.b | 3,1 | 2,9 | 2,0 |
| Schallabsorption [%] | 12 | 65 | 89 | <10 | <10 | 48 | 45 | 65 |
| Max. bei Frequenz | 1,6 kHz | 1,6 kHz | 1,6 kHz | 1,6 kHz | 1,6 kHz | 2,5 kHz | 3,15 kHz | 1,8 kHz |
| Zugfestigkeit [MPa] | 300 | 220 | 320 | 950 | 1090 | 440 | 480 | 530 |

## Patentansprüche

1. Verfahren zur Herstellung von Schaumstoffformteilen auf Basis von Propylenpolymerisat-Schaumstoffpartikeln, **dadurch gekennzeichnet**, **das** man eine Mischung enthaltend
a) 5 bis 95 Vol.-% Schaumstoffpartikel A) mit einer Offenzelligkeit (nach DIN-ISO 4590) von mehr als 40% und
b) 5 bis 95 Vol.-% Schaumstoffpartikel B) mit einer Offenzelligkeit (nach DN-ISO 4590) von weniger als 60 %
versintert.

2. Verfahren nach Anspruch 1, **dadurch gekennzeichnet, dass** die Schaumpartikel A) und B) eine Schüttdichte im Bereich von 5 bis 200 kg/m³ aufweisen.

3. Verfahren nach Anspruch 1 oder 2, **dadurch gekennzeichnet, dass** die Schaumpartikel A) und B) eine mittlerer Partikelgröße im Bereich von 1 bis 10 mm aufweisen.

4. Verfahren nach einem der Ansprüche 1 bis 3, **dadurch gekennzeichnet, dass** die Schaumpartikel A) und B) einen mittleren Zelldurchmesser im Bereich von 0,01 bis 0,5 mm aufweisen.

5. Verfahren nach einem der Ansprüche 1 bis 4, **dadurch gekennzeichnet, dass** die Schaumpartikel A) und B) im DSC-Thermogramm mindestens einen Hochtemperaturpeak bei einer höheren Temperatur als dem Schmelzepeak des Propylenpolymerisat aufweisen.

6. Verfahren nach einem der Ansprüche 1 bis 5, **dadurch gekennzeichnet, dass** eine Mischung enthaltend
a) 30 bis 80 Vol.-% Schaumpartikel A) und
b) 20 bis 70 Vol.-% Schaumpartikel B) enthalten.
eingesetzt wird.

7. Verfahren nach einem der Ansprüche 1 bis 6, **dadurch gekennzeichnet, dass** die Schaumpartikel A) eine Offenzelligkeit von mehr als 75% und die Schaumpartikel B) eine Offenzelligkeit von weniger als 10 % aufweisen.

8. Verfahren nach einem der Ansprüche 1 bis 7, **dadurch gekennzeichnet, dass** die Schaumstoffpartikel A) und B) aus einem Homopolymersiat oder Copolymerisat des Propylens mit bis zu 15 Gew.-% Ethylen und/oder Buten-1 bestehen.

## Claims

1. A process for producing foam moldings based on propylene polymer foam beads, which comprises sintering
a) from 5 to 95% by volume of foam beads A) having an open cell content (to DIN-ISO 4590) of more than 40% and
b) from 5 to 95% by volume of foam beads B) having an open cell content (to DIN-ISO 4590) of less than 60%.

2. The process according to claim 1, wherein the foam beads A) and B) have a bulk density in the range from 5 to 200 kg/m³.

3. The process according to claim 1 or 2, wherein the foam beads A) and B) have an average bead size in the range from 1 to 10 mm.

4. The process according to any of claims 1 to 3, wherein the foam beads A) and B) have an average cell diameter in the range from 0.01 to 0.5 mm.

5. The process according to any of claims 1 to 4, wherein the DSC thermogram of the foam beads A) and B) has at least one high-temperature peak at a higher temperature than the melt peak of the propylene polymer.

6. The process according to any of claims 1 to 5, wherein
a) from 30 to 80% by volume of foam beads A) and
b) from 20 to 70% by volume of foam beads B) are used.

7. The process according to any of claims 1 to 6, wherein the foam beads A) have an open cell content of more than 75% and the foam beads B) have an open cell content of less than 10%.

8. The process according to any of claims 1 to 7, wherein the foam beads A) and B) consist of a homopolymer or copolymer of propylene with under 15% by weight of ethylene and/or butene-1.

## Revendications

1. Procédé de fabrication de pièces moulées en mousse, à base de particules de mousse de polymère de propylène, **caractérisé en ce que** l'on soumet un mélange contenant :
a) 5 à 95 % en volume de particules de mousse A), présentant une porosité ouverte (selon la norme DIN-ISO 4590) supérieure à 40 %, et
b) 5 à 95 % en volume de particules de mousse B), présentant une porosité ouverte (selon la norme DN-ISO 4590) inférieure à 60 %, à une opération de frittage.

2. Procédé selon la revendication 1, **caractérisé en ce que** les particules de mousse A) et B) présentent une masse volumique située dans la plage de 5 à 200 kg/m3.

3. Procédé selon la revendication 1 ou 2, **caractérisé en ce que** les particules de mousse A) et B) présentent une taille particulaire moyenne située dans la plage de 1 à 10 mm.

4. Procédé selon l'une quelconque des revendications 1 à 3, **caractérisé en ce que** les particules de mousse A) et B) présentent un diamètre cellulaire moyen situé dans la plage de 0,01 à 0,5 mm.

5. Procédé selon l'une quelconque des revendications 1 à 4, **caractérisé en ce que** les particules de mousse A) et B) présentent, dans le thermogramme de DSC, au moins un pic de température élevée, à une valeur de température supérieure à celle du pic de fusion du polymère de propylène.

6. Procédé selon l'une quelconque des revendications 1 à 5, **caractérisé en ce que** l'on utilise un mélange contenant .
a) 30 à 80 % en volume de particules de mousse A), et
b) 20 à 70 % en volume de particules de mousse B).

7. Procédé selon l'une quelconque des revendications 1 à 6, **caractérisé en ce que** les particules de mousse A) présentent une porosité ouverte supérieure à 75 %, et les particules de mousse B) une porosité ouverte inférieure à 10 %.

8. Procédé selon l'une quelconque des revendications 1 à 7, **caractérisé en ce que** les particules de mousse A) et B) sont constituées d'un homopolymère ou d'un copolymère de propylène avec jusqu'à 15 % en poids d'éthylène et/ou de butène-1.
